# FASCICULE DE BREVET EUROPEEN

(11) **EP 3 386 708 B1**
(45) Date de publication et mention de la délivrance du brevet: **07.06.2023**
(21) Numéro de dépôt: 16825457.1
(22) Date de dépôt: 06.12.2016
(51) Int. Cl.: G06K 19/077, B29C 45/14

(54) **PROCÉDÉ D'INTÉGRATION D'UNE PUCE DE RADIO-IDENTIFICATION, PORTE-FILTRE, DISPOSITIF DE FILTRATION ET PROCÉDÉ DE FABRICATION D'UN PORTE-FILTRE**
VERFAHREN ZUR INTEGRATION EINES FILTERTRAGENDEN RADIOIDENTIFIKATIONSCHIPS, FILTERUNGSVORRICHTUNG UND VERFAHREN ZUR HERSTELLUNG EINES FILTERTRÄGERS
METHOD FOR INTEGRATING A FILTER-BEARING RADIO-IDENTIFICATION CHIP, FILTERING DEVICE AND METHOD FOR MANUFACTURING A FILTER CARRIER

(30) Priorité: 08.12.2015 FR 1561988; 08.12.2015 FR 1561996
(43) Date de publication de la demande: 17.10.2018
(73) Titulaire: AC-SP Etude & Recherche En Hygiène Industrielle, 30126 Saint-Laurent-Des-Arbres (FR)
(72) Inventeur: PLATON, Frédéric, 30126 Saint Laurent des Arbres (FR)
(74) Mandataire: Cornuejols, Georges
(86) Numéro de dépôt international: PCT/FR2016/053227
(87) Numéro de publication internationale: WO 2017/098135

(56) Documents cités:
- EP-A2- 1 850 941
- EP-B1- 1 850 941
- DE-U1-202009 001 270
- JP-A- 2012 148 554
- US-A- 5 354 532
- US-A1- 2010 052 215
- US-A1- 2012 103 880
- US-A1- 2012 223 002

## Description

### DOMAINE TECHNIQUE DE L'INVENTION

La présente invention vise un procédé d'intégration d'une puce de radio-identification dans une structure et un porte-filtre. Elle s'applique, notamment, à la fabrication de porte-filtres permettant la traçabilité de fabrication, de prélèvement, d'analyse et d'archivage de filtres à particules.

### ÉTAT DE LA TECHNIQUE

La détection de présence de particules nocives pour la santé d'opérateurs sur un site, et en particulier sur un chantier, est aujourd'hui réalisée par le positionnement de filtres à particules sur ce site.

Ces particules sont ensuite comptées en laboratoire, le résultat de ce comptage indiquant la présence ou non d'un risque lié à la respiration de ces particules.

Ce résultat est écrit sur un certificat qui peut ensuite être archivé.

L'inconvénient de ces systèmes est que le certificat est susceptible d'être perdu ou bien que le filtre peut être perdu. Pour des raisons de preuve, l'accès au filtre peut se révéler indispensable en vue d'une expertise et d'un comptage du nombre de particules sur le filtre.

De manière générale, les systèmes actuels ne permettent aucune traçabilité de l'historique des traitements réalisés à un filtre. Un procédé d'incorporation d'une puce R-FID dans un conteneur est divulgué dans le document US2010/052215A1.

### OBJET DE L'INVENTION

La présente invention vise à remédier à tout ou partie de ces inconvénients.

À cet effet, selon un premier aspect, la présente invention vise un procédé d'intégration d'une puce de radio-identification dans une structure, qui comporte :
- une étape de positionnement d'une puce, portée par un support de puce formé d'une première matière, dans un moule de fabrication de la structure,
- une étape d'injection d'une deuxième matière, miscible avec la première matière à une température d'injection de la deuxième matière, dans le moule,
- une étape de fonte du support de puce au contact de la deuxième matière injectée dans le moule pour former des première et deuxième matières mélangées et
- une étape de solidification des première et deuxième matières mélangées, la puce étant intégrée dans la structure solidifiée.

Grâce à ces dispositions, il est possible d'intégrer la puce de radio-identification dans la matière même de la structure, de sorte qu'il est impossible de désassembler la structure pour extraire la puce de radio-identification sans briser ladite structure.

Dans des modes de réalisation, la température de fonte de la première matière est inférieure à la température d'injection de la deuxième matière.

Ces modes de réalisation permettent de garantir la fonte de la première matière, quelle que soit la température d'injection de la deuxième matière.

Dans des modes de réalisation, la température de fonte de la première matière est inférieure à la température de fonte de la deuxième matière.

Dans des modes de réalisation, le moule présente une périphérie courbée, la puce et le support de puce présentant une courbure complémentaire, cette puce et ce supporte de puce étant positionné, au cours de l'étape de positionnement, en regard de la périphérie courbée du moule.

Ces modes de réalisation permettent l'intégration de puces de radio-identification dans tout type de structure.

Dans des modes de réalisation, le procédé objet de la présente invention comporte une étape d'enregistrement d'une information dans la puce de radio-identification

Selon un deuxième aspect, la présente invention vise un corps de porte-filtre, qui comporte une puce de radio-identification intégrée dans le corps de porte-filtre par la mise en oeuvre du procédé d'intégration d'une puce de radio-identification objet de la présente invention.

Dans des modes de réalisation, la puce de radio-identification est configurée pour enregistrer et pour émettre une information représentative d'un paramètre de fabrication.

Ces modes de réalisation permettent de réaliser une traçabilité de la fabrication du porte-filtre.

Dans des modes de réalisation, la puce de radio-identification est configurée pour enregistrer et pour émettre une information représentative d'un paramètre de filtration.

Ces modes de réalisation permettent de réaliser une traçabilité du prélèvement réalisé par le filtre associé au porte-filtre.

Dans des modes de réalisation, la puce de radio-identification est configurée pour enregistrer et pour émettre une information représentative d'un paramètre d'analyse d'un filtre positionné dans le porte-filtre.

Ces modes de réalisation permettent de réaliser une traçabilité de l'analyse réalisée sur le filtre associé au porte-filtre.

Dans des modes de réalisation, la puce de radio-identification est configurée pour enregistrer et pour émettre une information représentative d'un résultat d'analyse du filtre.

Ces modes de réalisation permettent d'enregistrer le résultat de l'analyse directement sur le porte-filtre.

Selon un troisième aspect, la présente invention vise un porte-filtre pour filtre à particules comportant un corps, qui comporte :
- un moyen de fixation du filtre à particules,
- une puce de radio-identification configurée pour enregistrer et pour émettre une information représentative d'un identifiant du porte-filtre, cette puce étant positionnée dans le corps du porte-filtre par injection.

L'utilisation d'une puce de radio-identification permet l'enregistrement et l'émission sans-contact des informations stockées. Cette puce permet également une lecture automatique des informations stockées pouvant interagir avec un système d'information sans que ces informations soient manuellement entrées dans le système d'information. Enfin, l'injection de la puce dans le corps du porte-filtre permet de rendre indissociable le filtre, le porte-filtre et la puce de radio-identification.

Il résulte de cette incapacité à séparer les trois éléments que toute tentative de récupération de la puce entraîne la destruction du porte-filtre.

Dans des modes de réalisation, pour injecter la puce, la puce est insérée dans un moule d'une partie du corps du porte-filtre, ce porte-filtre étant formé par injection de matière dans le moule.

Ces modes de réalisation permettent de rendre indissociable la puce et le corps de filtre.

Dans des modes de réalisation, la puce est montée sur un support de puce, la matière de ce support de puce étant miscible avec la matière du porte-filtre lors de l'injection dans le moule pour former le corps de porte-filtre.

Dans des modes de réalisation, la matière du support de puce et la matière du corps de porte-filtre présentent une température de fonte du même ordre de grandeur.

Dans des modes de réalisation, le porte-filtre objet de la présente invention présente une forme de cylindre de révolution, la puce étant courbée et positionnée à la périphérie du corps.

Ces modes de réalisation permettent une interaction facilitée entre la puce et un lecteur de puce, ce lecteur de puce pouvant être positionné en regard d'une quelconque partie de la périphérie du corps.

Dans des modes de réalisation, une surface courbée de la puce est positionnée en regard d'une périphérie courbée du corps, la surface courbée et la périphérie courbée étant courbées selon une même direction.

Dans des modes de réalisation, la puce de radio-identification est configurée pour enregistrer et pour émettre une information représentative d'un paramètre de fabrication.

Ces modes de réalisation permettent de réaliser une traçabilité de la fabrication du porte-filtre.

Dans des modes de réalisation, la puce de radio-identification est configurée pour enregistrer et pour émettre une information représentative d'un paramètre de filtration.

Ces modes de réalisation permettent de réaliser une traçabilité du prélèvement réalisé par le filtre associé au porte-filtre.

Dans des modes de réalisation, la puce de radio-identification est configurée pour enregistrer et pour émettre une information représentative d'un paramètre d'analyse du filtre.

Ces modes de réalisation permettent de réaliser une traçabilité de l'analyse réalisée sur le filtre associé au porte-filtre.

Dans des modes de réalisation, la puce de radio-identification est configurée pour enregistrer et pour émettre une information représentative d'un résultat d'analyse du filtre.

Ces modes de réalisation permettent d'enregistrer le résultat de l'analyse directement sur le porte-filtre.

Dans des modes de réalisation, la puce de radio-identification est configurée pour enregistrer et pour émettre une information représentative d'un identifiant de filtre.

Ces modes de réalisation permettent d'authentifier le filtre associé au porte-filtre afin d'éviter tout remplacement ou toute modification frauduleuse du filtre.

Dans des modes de réalisation, la puce de radio-identification enregistre au moins une information dans une mémoire non-réinscriptible, chaque autre information étant enregistrée dans une mémoire réinscriptible.

Ces modes de réalisation permettent de rendre non modifiable une information enregistrée sur la puce.

Selon un quatrième aspect, la présente invention vise un dispositif de filtration, qui comporte un porte-filtre objet de la présente invention et un filtre fixé à ce porte-filtre.

Selon un cinquième aspect, la présente invention vise un procédé de fabrication d'un porte-filtre objet de la présente invention, qui comporte :
- une étape de positionnement d'une puce, portée par un support de puce formé d'une première matière, dans un moule de fabrication d'un corps de porte-filtre,
- une étape d'injection d'une deuxième matière, miscible avec la première matière à une température d'injection de la deuxième matière, dans le moule pour former le corps de porte-filtre,
- une étape de fonte du support de puce au contact de la deuxième matière injectée dans le moule de fabrication du corps de porte-filtre pour former des prière et deuxième matières mélangées,
- une étape de solidification des première et deuxième matières mélangées, la puce étant positionnée dans le corps de porte-filtre et
- une étape d'enregistrement d'une information représentative d'un identifiant de porte-filtre dans une puce de radio-identification.

Les buts, avantages et caractéristiques particulières du porte-filtre objet du deuxième aspect de la présente invention, du dispositif de filtration objet du quatrième objet de la présente invention et du procédé objet du cinquième objet de la présente invention étant similaires à ceux du porte-filtre objet de la présente invention, ils ne sont pas rappelés ici.

### BRÈVE DESCRIPTION DES FIGURES

D'autres avantages, buts et caractéristiques particulières de l'invention ressortiront de la description non limitative qui suit d'au moins un mode de réalisation particulier du porte-filtre, du dispositif et du procédé objets de la présente invention, en regard des dessins annexés, dans lesquels :
- la figure 1 représente, schématiquement, un mode de réalisation particulier du porte-filtre objet de la présente invention,
- la figure 2 représente, schématiquement, un mode de réalisation particulier du dispositif objet de la présente invention,
- la figure 3 représente, schématiquement et sous forme d'un logigramme, une succession d'étapes particulière du procédé objet de la présente invention,
- la figure 4 représente schématiquement, une vue éclatée d'un mode de réalisation particulier du dispositif objet de la présente invention,
- la figure 5 représente, schématiquement et sous forme d'un logigramme, une succession d'étape particulière du procédé objet de la présente invention et
- la figure 6 représente, schématiquement, un mode de réalisation particulier du porte-filtre objet de la présente invention.

### DESCRIPTION D'EXEMPLES DE RÉALISATION DE L'INVENTION

La présente description est donnée à titre non limitatif, chaque caractéristique d'un mode de réalisation pouvant être combinée à toute autre caractéristique de tout autre mode de réalisation de manière avantageuse.

On note dès à présent que les figures ne sont pas à l'échelle.

Une chaine de caractère représentative d'un identifiant de client est, par exemple, le nom du client, des initiales du client ou une référence numérique correspondant, dans une base de données, à un nom de client.

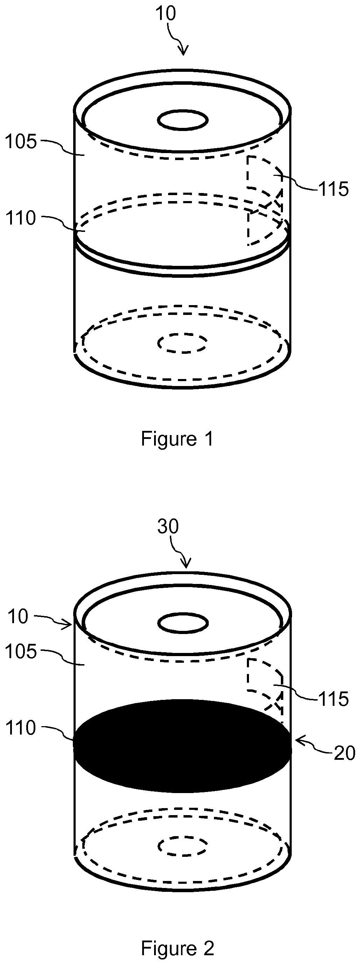

On observe, sur la figure 1, qui n'est pas à l'échelle, une vue schématique d'un mode de réalisation du porte-filtre 10 objet de la présente invention. Ce porte-filtre 10 pour filtre 20 à particules comportant un corps 105, qui comporte :
- un moyen de fixation 110 du filtre à particules,
- une puce 115 de radio-identification configurée pour enregistrer et pour émettre une information représentative d'un identifiant du porte-filtre 10, cette puce 115 étant positionnée dans le corps du porte-filtre 10 par injection.

Le filtre 20 est, par exemple, un filtre dont les pores présentent un dimensionnement de l'ordre de 0,45 micromètres, ce filtre étant réalisé en ester de cellulose. Ce filtre 20 présente, par exemple, la forme d'une pastille circulaire adaptée à un encastrement dans le porte-filtre 10.

Le porte-filtre 10 est, par exemple, une structure rigide présentant un corps 105 de forme cylindrique. Ce corps 105 entoure un volume intérieur présentant deux ouvertures, le filtre 20 étant positionné dans ce volume intérieur entre les deux ouvertures.

Lorsqu'une filtration a lieu, l'une de ces ouvertures est reliée à une pompe à air, de sorte qu'une aspiration a lieu au niveau de l'autre ouverture, forçant de l'air à traverser le filtre 20 dans le but de capter, au niveau de ce filtre 20, des particules en suspension dans l'air aspiré.

Le filtre 20 est adapté, par exemple, à la captation de particules, de fibres et notamment de particules d'amiante en suspension dans l'air ambiant d'un local en chantier.

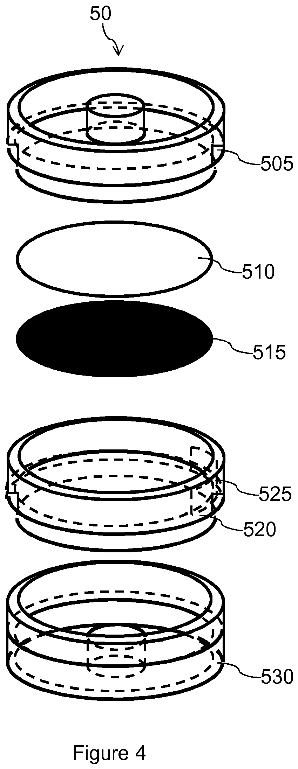

Le moyen de fixation 110 est, par exemple, formé par un support de filtre, tel que représenté en figure 4, associé au filtre 20, cet ensemble étant pris au piège entre deux parois externes du porte-filtre 10, ces deux parois externes étant pourvues de pièces complémentaires d'un mécanisme d'enclipsage. Le filtre 20 est positionné contre le support de filtre dans le volume intérieur et entouré par une première paroi externe, puis, la deuxième paroi externe est enclipsée à la première partie de sorte que le volume intérieur est formé, latéralement, par l'enclipsage des deux parois externes.

Dans des variantes, le filtre 20 est positionné dans le volume intérieur puis recouvert d'une paroi lors de la fabrication du porte-filtre 10, cette paroi étant collée ou soudée à la structure externe du porte-filtre 10.

Dans des variantes, une pluralité de filtres 20 est fixée au porte-filtre 10, ces filtres 20 étant positionnés en parallèle ou en série le long du flux d'air aspiré depuis la première ouverture vers la deuxième ouverture du porte-filtre 10.

La puce 115 de radio-identification est, par exemple, une puce dite « marqueur RFID » (de l'anglais Radio Frequency Identification) ou « radio-étiquette ». Cette puce 115 comporte une antenne (non représentée) pour recevoir un signal d'un lecteur de puce. La puce 115 est encapsulée dans un stockage miniature ou fixée à un substrat.

L'intérêt de la technologie RFID tient en ce que la puce 115 de radio-identification est passive, c'est-à-dire qu'aucune alimentation électrique n'alimente la puce 115, cette puce 115 tirant l'énergie nécessaire à son fonctionnement de la force du signal émis par le lecteur de puce.

Dans des variantes, la puce 115 de radio-identification est une puce compatible avec la technologie NFC (de l'anglais Near Field Communication, traduit par Communication en Champ Proche).

La puce 115 est associée au corps 105 de porte-filtre de la manière suivante :
- la puce 115 est insérée dans un moule de fabrication d'au moins une partie du corps 105 de porte-filtre,
- de la matière est injectée dans le moule pour former le corps 105 de porte-filtre,
- la matière formant un support de puce 115 fond au contact de la matière fondue injectée dans le moule, la matière de ce support de puce étant miscible avec la matière du porte-filtre lors de l'injection dans le moule pour former le corps 105 de porte-filtre,
- les matières formant le support de puce et le corps 105 de porte-filtre se mélangent,
- ces matières durcissent, la puce 115 étant intégrée au corps 105 de porte-filtre.

Préférentiellement, la matière du support de puce et la matière du corps de porte-filtre présentent une température de fonte du même ordre de grandeur. Par du même ordre de grandeur, on entend que la différence de températures de fonte est inférieure à 10% de la température de fonte la plus élevée.

Cette puce 115 est ainsi injectée dans le corps 105 du porte-filtre 10 cours de la fabrication de ce porte-filtre 10.

Préférentiellement, la capsule entourant la puce 115 est formée dans un matériau miscible avec un matériau formant le corps 105 à une température déterminée, cette température provoquant à la fois la fonte du matériau formant la capsule et du matériau formant le corps 105.

De cette manière, la puce 115 est intégrée à la matière du porte-filtre 10, ce qui rend la séparation de ces deux éléments impossible sans briser le porte-filtre 10.

Cette puce 115 est configurée pour enregistrer une information représentative d'un identifiant du porte-filtre 10. Cette information est, par exemple, une chaine de caractères alphanumériques, cette chaine de caractères représentative de :
- l'identifiant du porte-filtre 10 ou
- un code d'identification du porte-filtre 10 permettant, via une table de correspondance d'une base de données joignable sur un réseau de données connecté au lecteur de la puce 115, d'obtenir l'identifiant du porte-filtre 10.

Ce code peut être chiffré pour des raisons de sécurité.

Dans des modes de réalisation, tels que celui représenté en figure 1, la puce 115 de radio-identification est configurée pour enregistrer et pour émettre une information représentative d'un paramètre de fabrication.

Cette information représentative d'un paramètre de fabrication est, par exemple, une chaine de caractères alphanumériques représentative de :
- un ordre de fabrication, c'est-à-dire un numéro de commande,
- un nom de client,
- une date représentative de la réception d'une commande de fabrication ou à la date de fabrication et/ou
- un numéro de lot auquel ce porte-filtre 10 appartient.

Dans des variantes, cette chaine de caractère est un code permettant, via une table de correspondance d'une base de données joignable sur un réseau de données connecté au lecteur de la puce 115, d'obtenir l'ordre de fabrication, le nom du client, la date de réception de commande ou de fabrication et/ou le numéro de lot du porte-filtre 10.

Dans des variantes, cette information représentative d'un paramètre de fabrication est, par exemple, une chaine de caractères alphanumériques représentative de :
- un type de filtre 20,
- une date représentative de la date d'assemblage du filtre 20 et du porte-filtre 10 et/ou
- un numéro de lot auquel le filtre 20 appartient.

Dans des variantes, cette chaine de caractère est un code permettant, via une table de correspondance d'une base de données joignable sur un réseau de données connecté au lecteur de la puce 115, d'obtenir le type de filtre 20, la date d'assemblage du filtre 20 et du porte-filtre 10 et/ou le numéro de lot du filtre 20.

Grâce à l'identifiant de porte-filtre, un utilisateur peut avoir accès à toutes les données enregistrées sur une base de données en relation avec cet identifiant de porte-filtre. Dans des variantes, une telle donnée enregistrée est, par exemple, un certificat d'authenticité et d'identification du porte-filtre 10 et du filtre 20.

Dans des modes de réalisation, tels que celui représenté en figure 1, la puce 115 de radio-identification est configurée pour enregistrer et pour émettre une information représentative d'un paramètre de filtration.

Cette information représentative d'un paramètre de filtration est, par exemple, une chaine de caractères alphanumériques représentative de :
- un lieu de filtration,
- une date et une heure de filtration et/ou
- un nom d'utilisateur associé à un lecteur de la puce 115.

Dans des variantes, cette chaine de caractère est un code permettant, via une table de correspondance d'une base de données joignable sur un réseau de données connecté au lecteur de la puce 115, d'obtenir le lieu de filtration, la date et l'heure de la filtration et/ou le nom d'utilisateur associé au lecteur de la puce 115.

Dans des modes de réalisation, tels que celui représenté en figure 1, la puce 115 de radio-identification est configurée pour enregistrer et pour émettre une information représentative d'un paramètre d'analyse du filtre 20.

Cette information représentative d'un paramètre d'analyse du filtre 20 est, par exemple, une chaine de caractères alphanumériques représentative de :
- un lieu d'analyse,
- une date d'analyse,
- un résultat d'analyse des particules dans le filtre 20, notamment un résultat de comptage,
- une localisation informatique et/ou géographique des résultats d'analyse,
- une localisation géographique du filtre 20.

Dans des variantes, cette chaine de caractère est un code permettant, via une table de correspondance d'une base de données joignable sur un réseau de données connecté au lecteur de la puce 115, d'obtenir le lieu d'analyse, la date d'analyse, le résultat d'analyse, la localisation informatique et/ou géographique des résultats et/ou la localisation géographique du filtre.

Dans des modes de réalisation, tels que celui représenté en figure 1, la puce 115 de radio-identification est configurée pour enregistrer et pour émettre une information représentative d'un identifiant de filtre.

Cet identifiant de filtre est, par exemple, un code généré à partir d'une photographie du filtre 20 fixé au porte-filtre 10. Dans des variantes, cet identifiant est une chaine de caractères alphanumériques imprimée sur le filtre 20.

Dans des modes de réalisation, tels que celui représenté en figure 1, lequel la puce 115 de radio-identification enregistre au moins une information dans une mémoire non-réinscriptible, chaque autre information étant enregistrée dans une mémoire réinscriptible.

Dans des modes de réalisation, tels que celui représenté en figure 1, pour positionner la puce 115, une partie du corps 105 du porte-filtre est fondue, la puce étant injectée dans cette partie fondue avant que cette partie solidifie.

Ces modes de réalisation correspondent au positionnement de la puce 115 après la fabrication du porte-filtre 10.

Dans des modes de réalisation, tels que celui représenté en figure 1, le porte-filtre 10 présente une forme de cylindre de révolution, la puce 115 étant courbée et positionnée à la périphérie du corps 105.

La forme d'un cylindre de révolution permet de faciliter la création de joints d'étanchéité associés au porte-filtre 10, ces joints présentant une ouverture circulaire complémentaire à la forme externe du porte-filtre 10.

La puce 115 présente, par exemple, une surface courbée de manière à ce que lorsque cette surface est projetée sur un plan déterminé, cette surface présente une forme d'arc de cercle. Le positionnement de cette puce 115 est préférentiellement réalisé de manière à ce que le point d'inversion de la courbure soit positionné au plus près de la face externe du corps 105.

Dans des modes de réalisation, tels que celui représenté en figure 1, une surface courbée de la puce 115 est positionnée en regard d'une périphérie courbée du corps 105, la surface courbée et la périphérie courbée étant courbées selon une même direction.

Dans des modes de réalisation non représentés, la présente invention vise un système de filtration comportant :
- un dispositif de filtration tel que représenté en figure 2 et
- une pompe d'aspiration d'air pour être connectée à une ouverture du porte-filtre 10.

Dans des modes de réalisation particuliers, le système de filtration comporte un lecteur de puce de radio-identification pour lire au moins une information émise par la puce 115 de radio-identification lorsque le ce lecteur est rapproché de ladite puce 115.

Ce lecteur de puce est, par exemple, un lecteur RFID ultra portable connecté à un terminal portable communicant via une liaison Bluetooth, Zigbee ou WiFi par exemple. Ce lecteur de puce agit comme un périphérique du terminal portable communicant et, à ce titre, est compatible avec le système d'exploitation mis en oeuvre par le terminal portable communicant, un tel système d'exploitation appartenant à la famille iOS ou Android.

Ce lecteur de puce agit à la place d'une interface de saisie de type clavier ou de l'association d'une souris ou d'un écran tactile et d'un clavier virtuel.

Ainsi, comme on le comprend à la lecture de la description de la figure 1, la présente invention permet une traçabilité du filtre 20 depuis la fabrication du porte-filtre 10 jusqu'à l'archivage de ce porte-filtre 10.

Cette traçabilité de l'archivage permet l'exécution simplifiée d'opérations d'inventaire des filtres 20 et porte-filtres 10 archivés. Il est possible, notamment, de chercher un porte-filtre 10 en indiquant sur le lecteur l'identifiant de porte-filtre 10 recherché puis de déplacer le lecteur en regard de chaque porte-filtre 10 afin d'en recevoir l'identifiant jusqu'à ce que l'identifiant reçu corresponde à l'identifiant recherché.

On observe, sur la figure 2, schématiquement, un mode de réalisation particulier du dispositif 30 de filtration. Ce dispositif 30 comporte un porte-filtre 10 tel que décrit en regard de la figure 1 et un filtre 20 fixé à ce porte-filtre 10.

On observe, sur la figure 4, schématiquement, un mode de réalisation particulier du porte-filtre 50 objet de la présente invention. Ce porte-filtre 50 comporte :
- un premier corps de porte-filtre 505 moulé comportant une ouverture configurée pour être traversée par de l'air ambiant,
- un deuxième corps de porte-filtre 520 moulé fixé au premier corps de porte-filtre 505, ce deuxième corps de porte-filtre 520 comportant :
   - une ouverture pour être traversée par de l'air ambiant entré dans l'ouverture du premier corps de porte-filtre 505 et
   - une puce 525 de radio-identification,
- un support de filtre 515 supportant un filtre 510, cet ensemble étant positionné entre l'ouverture du deuxième corps de porte-filtre 520 et le premier corps de porte-filtre 505 et
- un troisième corps de porte-filtre 530 moulé comportant une ouverture configurée pour être traversée par de l'air ambiant ayant traversé le filtre 510, ce troisième corps de porte-filtre 530 étant configuré pour être fixé à une tête d'aspiration de l'air ambiant.

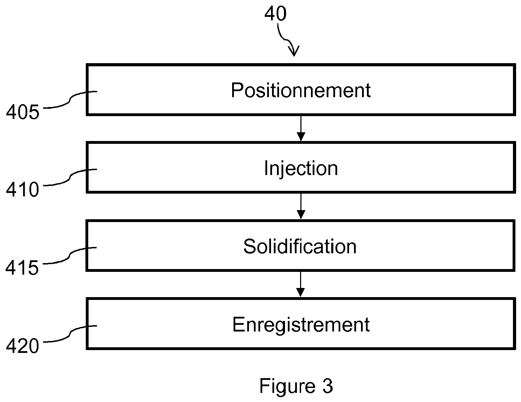

On observe, sur la figure 3, schématiquement, un logigramme d'étapes particulier du procédé 40 objet de la présente invention. Ce procédé 40 de fabrication d'un porte-filtre 10 tel que décrit en regard de la figure 1, comporte :
- une étape 405 de positionnement d'une puce dans un moule de fabrication d'un corps de porte-filtre,
- une étape 410 d'injection de matière dans le moule pour former le corps de porte-filtre,
- une étape 415 de solidification de la matière, la puce étant positionnée dans le corps de porte-filtre et
- une étape 420 d'enregistrement d'une information représentative d'un identifiant de porte-filtre dans une puce de radio-identification.

L'étape de positionnement 405 est réalisée, par exemple, par insertion de la puce dans un moule destiné à permettre la fabrication du corps de filtre par injection de matière dans le moule. Préférentiellement, la puce est montée sur un support de puce présentant une température de fonte du même ordre de grandeur que la température de fonte de la matière injectée dans le moule. La matière du support de puce est miscible avec la matière injectée dans le moule.

L'étape d'injection 410 est réalisée, par exemple, par une tête d'injection de matière fondue, issue d'un réservoir d'une telle matière, dans le moule jusqu'à ce que le moule soit rempli.

L'étape de solidification 415 est réalisée par refroidissement total ou partiel du corps de support de filtre ainsi moulé.

L'étape d'enregistrement 420 est, par exemple, réalisée par un lecteur RFID en mode écriture.

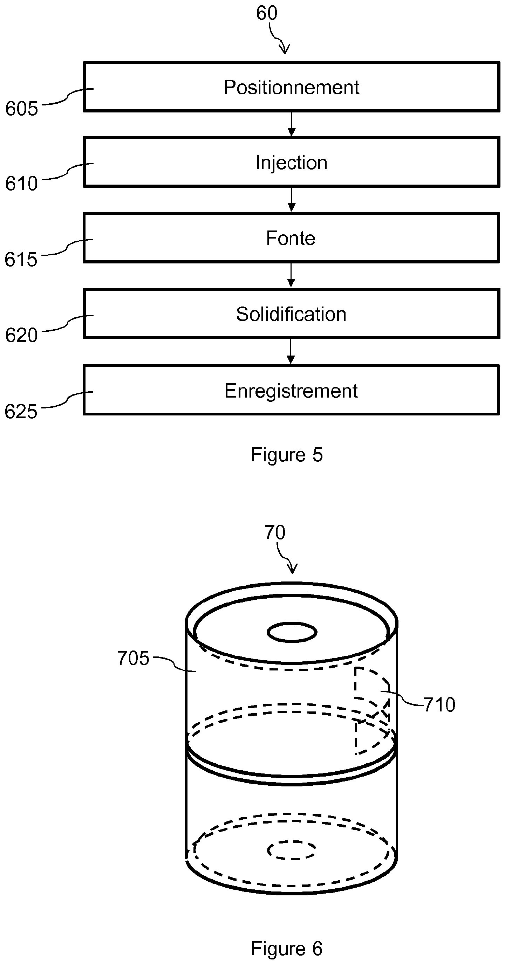

On observe, sur la figure 5, schématiquement, un logigramme d'étapes particulier du procédé 60 objet de la présente invention. Ce procédé 60 d'intégration d'une puce de radio-identification dans une structure comporte :
- une étape 605 de positionnement d'une puce, portée par un support de puce formé d'une première matière, dans un moule de fabrication de la structure,
- une étape 610 d'injection d'une deuxième matière, miscible avec la première matière à une température d'injection de la deuxième matière, dans le moule,
- une étape 615 de fonte du support de puce au contact de la deuxième matière injectée dans le moule et
- une étape 620 de solidification des première et deuxième matières, la puce étant intégrée dans la structure solidifiée.

Dans des modes de réalisation préférentiels, la température de fonte de la première matière est inférieure à la température d'injection de la deuxième matière.

Dans des modes de réalisation préférentiels, la température de fonte de la première matière est inférieure à la température de fonte de la deuxième matière.

Dans des modes de réalisation préférentiels, le moule présente une périphérie courbée, la puce et le support de puce présentant une courbure complémentaire, cette puce et ce supporte de puce étant positionné, au cours de l'étape de positionnement, en regard de la périphérie courbée du moule.

Dans des modes de réalisation préférentiels, le procédé 60 comporte une étape 625 d'enregistrement d'une information dans la puce de radio-identification

On observe, sur la figure 6, schématiquement, un mode de réalisation particulier du corps 705 de porte-filtre 70. Ce corps 705 de porte-filtre 70 comporte une puce 710 de radio-identification intégrée dans le corps de porte-filtre par la mise en oeuvre du procédé d'intégration d'une puce de radio-identification objet de la présente invention.

Dans des modes de réalisation préférentiels, la puce 710 de radio-identification est configurée pour enregistrer et pour émettre une information représentative d'un paramètre de fabrication.

Dans des modes de réalisation préférentiels, la puce 710 de radio-identification est configurée pour enregistrer et pour émettre une information représentative d'un paramètre de filtration.

Dans des modes de réalisation préférentiels, la puce 710 de radio-identification est configurée pour enregistrer et pour émettre une information représentative d'un paramètre d'analyse d'un filtre positionné dans le porte-filtre.

Dans des modes de réalisation préférentiels, la puce 710 de radio-identification est configurée pour enregistrer et pour émettre une information représentative d'un résultat d'analyse du filtre.

## Revendications

1. Procédé (60) d'intégration d'une puce de radio-identification dans une structure, **caractérisé en ce qu'**il comporte :
- une étape (605) de positionnement d'une puce, portée par un support de puce formé d'une première matière, dans un moule de fabrication de la structure,
- une étape (610) d'injection d'une deuxième matière, miscible avec la première matière à une température d'injection de la deuxième matière, dans le moule,
- une étape (615) de fonte du support de puce au contact de la deuxième matière injectée dans le moule pour former des première et deuxième matières mélangées et
- une étape (620) de solidification des première et deuxième matières mélangées, la puce étant intégrée dans la structure solidifiée.

2. Procédé (60) selon la revendication 1, dans lequel la température de fonte de la première matière est inférieure à la température d'injection de la deuxième matière.

3. Procédé (60) selon la revendication 2, dans lequel la température de fonte de la première matière est inférieure à la température de fonte de la deuxième matière.

4. Procédé (60) selon l'une des revendications 1 à 3, dans lequel le moule présente une périphérie courbée, la puce et le support de puce présentant une courbure complémentaire, cette puce et ce supporte de puce étant positionné, au cours de l'étape de positionnement, en regard de la périphérie courbée du moule.

5. Corps (705) de porte-filtre (70), **caractérisé en ce qu'**il comporte une puce (710) de radio-identification intégrée dans le corps de porte-filtre par la mise en oeuvre du procédé d'intégration d'une puce de radio-identification selon l'une des revendications 1 à 4.

6. Corps (705) de porte-filtre (70) selon la revendication 5, dans lequel la puce (710) de radio-identification est configurée pour enregistrer et pour émettre une information représentative d'un paramètre de fabrication.

7. Corps (705) de porte-filtre (70) selon l'une des revendications 5 ou 6, dans lequel la puce (710) de radio-identification est configurée pour enregistrer et pour émettre une information représentative d'un paramètre de filtration.

8. Corps (705) de porte-filtre (70) selon l'une des revendications 5 à 7, dans lequel la puce (710) de radio-identification est configurée pour enregistrer et pour émettre une information représentative d'un paramètre d'analyse d'un filtre positionné dans le porte-filtre.

9. Corps (705) de porte-filtre (70) selon l'une des revendications 5 à 8, dans lequel la puce (710) de radio-identification est configurée pour enregistrer et pour émettre une information représentative d'un résultat d'analyse du filtre.

10. Corps de porte-filtre (10) selon l'une des revendications 5 à 9, dans lequel, pour injecter la puce (115), la puce est insérée dans un moule d'une partie du corps (105) du porte-filtre, ce porte-filtre étant formé par injection de matière dans le moule.

11. Corps de porte-filtre (10) selon l'une des revendications 5 à 10, dans lequel la puce (115) est montée sur un support de puce, la matière de ce support de puce étant miscible avec la matière du porte-filtre lors de l'injection dans le moule pour former le porte-filtre.

12. Corps de porte-filtre (10) selon la revendication 11, dans lequel la matière du support de puce et la matière du porte-filtre présentent une température de fonte du même ordre de grandeur.

13. Corps de porte-filtre (10) selon l'une des revendications 5 à 12, qui présente une forme de cylindre de révolution, la puce (115) étant courbée et positionnée à la périphérie du corps.

14. Corps de porte-filtre (10) selon la revendication 13, dans lequel une surface courbée de la puce (115) est positionnée en regard d'une périphérie courbée du corps (105), la surface courbée et la périphérie courbée étant courbées selon une même direction.

15. Procédé (40) de fabrication d'un porte-filtre (10), **caractérisé en ce qu'**il comporte :
- une étape (405) de positionnement d'une puce, portée par un support de puce formé d'une première matière, dans un moule de fabrication d'un corps de porte-filtre,
- une étape (410) d'injection d'une deuxième matière, miscible avec la première matière à une température d'injection de la deuxième matière, dans le moule pour former le corps de porte-filtre,
- une étape de fonte du support de puce au contact de la deuxième matière injectée dans le moule de fabrication du corps de porte-filtre pour former des première et deuxième matières mélangées,
- une étape (415) de solidification des première et deuxième matières mélangées, la puce étant positionnée dans le corps de porte-filtre et
- une étape (420) d'enregistrement d'une information représentative d'un identifiant de porte-filtre dans une puce de radio-identification.

## Patentansprüche

1. Verfahren (60) zur Integration eines Funkidentifikationschips in eine Struktur, **dadurch gekennzeichnet, dass** es umfasst:
- ein Schritt (605) des Positionierens eines Chips, der von einem Chiphalter getragen wird, der aus einem ersten Material besteht, in einer Form zur Herstellung der Struktur,
- einen Schritt (610) des Einspritzens eines zweiten, mit dem ersten Material mischbaren Materials bei einer Einspritztemperatur des zweiten Materials in die Form,
- einen Schritt (615) des Schmelzens des Chiphalters im Kontakt mit dem zweiten in die Form eingespritzten Material, um sowohl ein erstes und zweites gemischtes Material zu bilden und
- einen Schritt (620) des Verfestigens des ersten und zweiten gemischten Materials, wobei der Chip in die verfestigte Struktur integriert ist.

2. Verfahren (60) nach Anspruch 1, wobei die Schmelztemperatur des ersten Materials niedriger als die Einspritztemperatur des zweiten Materials ist.

3. Verfahren (60) nach Anspruch 2, wobei die Schmelztemperatur des ersten Materials niedriger als die Schmelztemperatur des zweiten Materials ist.

4. Verfahren (60) nach einem der Ansprüche 1 bis 3, wobei die Form eine gekrümmte Peripherie aufweist, wobei der Chip und der Chiphalter eine komplementäre Krümmung aufweisen, wobei dieser Chip und dieser Chiphalter während des Positionierungsschritts der gekrümmten Peripherie der Form zugewandt positioniert werden.

5. Körper (705) eines Filterträgers (70), **dadurch gekennzeichnet, dass** er einen Funkidentifikationschip (710) aufweist, der im Filterträgerkörper durch die Durchführung des Verfahrens zur Integration eines Funkidentifikationschips nach einem der Ansprüche 1 bis 4 integriert ist.

6. Körper (705) eines Filterträgers (70) nach Anspruch 5, wobei der Funkidentifikationschip (710) ausgelegt ist, um eine Information zu speichern und zu senden, die für einen Fertigungsparameter repräsentativ ist.

7. Körper (705) eines Filterträgers (70) nach einem der Ansprüche 5 oder 6, wobei der Funkidentifikationschip (710) ausgelegt ist, um eine Information zu speichern und zu senden, die für einen Filtrationsparameter repräsentativ ist.

8. Körper (705) eines Filterträgers (70) nach einem der Ansprüche 5 bis 7, wobei der Funkidentifikationschip (710) ausgelegt ist, um eine Information zu speichern und zu senden, die für einen Analyseparameter eines im Filterträger positionierten Filters repräsentativ ist.

9. Körper (705) eines Filterträgers (70) nach einem der Ansprüche 5 bis 8, wobei der Funkidentifikationschip (710) ausgelegt ist, um eine Information zu speichern und zu senden, die für ein Analyseergebnis des Filters repräsentativ ist.

10. Filterträgerkörper (10) nach einem der Ansprüche 5 bis 9, wobei, um den Chip (115) einzuspritzen, der Chip in eine Form eines Teils des Körpers (105) des Filterträgers eingesetzt wird, wobei dieser Filterträger durch Einspritzen von Material in die Form gebildet wird.

11. Filterträgerkörper (10) nach einem der Ansprüche 5 bis 10, wobei der Chip (115) auf einem Chiphalter angebracht ist, wobei das Material dieses Chiphalters mit dem Filterträgermaterial beim Einspritzen in die Form mischbar ist, um den Filterträger zu bilden.

12. Filterträgerkörper (10) nach Anspruch 11, wobei das Material des Chiphalters und das Material des Filterträgers eine Schmelztemperatur gleicher Größenordnung aufweisen.

13. Filterträgerkörper (10) nach einem der Ansprüche 5 bis 12, der eine Form eines Drehzylinders aufweist, wobei der Chip (115) gekrümmt und an der Peripherie des Körpers positioniert ist.

14. Filterträgerkörper (10) nach Anspruch 13, wobei eine gekrümmte Oberfläche des Chips (115) einer gekrümmten Peripherie des Körpers (105) zugewandt positioniert ist, wobei die gekrümmte Oberfläche und die gekrümmte Peripherie in derselben Richtung gekrümmt sind.

15. Verfahren (40) zur Herstellung eines Filterträgers (10), **dadurch gekennzeichnet, dass** es aufweist:
- einen Schritt (405) des Positionierens eines Chips, der von einem Chiphalter getragen wird, der aus einem ersten Material gebildet ist, in einer Form zur Herstellung eines Filterträgerkörpers,
- einen Schritt (410) des Einspritzens eines zweiten, mit dem ersten Material mischbaren Materials bei einer Einspritztemperatur des zweiten Materials in die Form, um den Filterträgerkörper zu bilden,
- einen Schritt des Schmelzens des Chiphalters im Kontakt mit dem zweiten in die Fertigungsform des Filterträgerkörpers eingespritzten Materials, um das erste und das zweite gemischte Material zu bilden,
- einen Schritt (415) des Verfestigens des ersten und zweiten gemischten Materials, wobei der Chip im Filterträgerkörper positioniert ist und
- einen Schritt (420) des Speicherns einer Information, die für eine Filterträgerkennung in einem Funkidentifikationschip repräsentativ ist.

## Claims

1. Method (60) for integrating a radio-identification chip in a structure, **characterised in that** it comprises:
- a step (605) of positioning a chip, carried by a chip support formed of a first material, in a mould for manufacturing the structure,
- a step (610) of injecting a second material, miscible with the first material at an injection temperature of the second material, into the mould,
- a step (615) of melting the chip support in contact with the second material injected into the mould to form first and second mixed materials, and
- a step (620) of solidifying the first and second mixed materials, the chip being integrated in the solidified structure.

2. Method (60) according to claim 1, wherein the melting temperature of the first material is lower than the injection temperature of the second material.

3. Method (60) according to claim 2, wherein the melting temperature of the first material is lower than the melting temperature of the second material.

4. Method (60) according to one of claims 1 to 3, wherein the mould has a curved periphery, the chip and the chip support having a complementary curvature, this chip and this chip support being positioned, during the positioning step, opposite the curved periphery of the mould.

5. Filter holder (70) body (705), **characterised in that** it comprises a radio-identification chip (710) integrated in the filter holder body by implementing the method for integrating a radio-identification chip according to one of claims 1 to 4.

6. Filter holder (70) body (705) according to claim 5, wherein the radio-identification chip (710) is configured to record and transmit information representative of a manufacturing parameter.

7. Filter holder (70) body (705) according to one of claims 5 or 6, wherein the radio-identification chip (710) is configured to record and transmit information representative of a filtration parameter.

8. Filter holder (70) body (705) according to one of claims 5 to 7, wherein the radio-identification chip (710) is configured to record and transmit information representative of an analysis parameter of a filter positioned in the filter holder.

9. Filter holder (70) body (705) according to one of claims 5 to 8, wherein the radio-identification chip (710) is configured to record and transmit information representative of a filter analysis result.

10. Filter holder body (10) according to one of claims 5 to 9, wherein, to inject the chip (115), the chip is inserted into a mould of a portion of the body (105) of the filter holder, this filter holder being formed by injecting material into the mould.

11. Filter holder body (10) according to one of claims 5 to 10, wherein the chip (115) is mounted on a chip support, the material of this chip support being miscible with the material of the filter holder during the injection into the mould to form the filter holder.

12. Filter holder body (10) according to claim 11, wherein the material of the chip support and the material of the filter holder have a melting temperature of the same order of magnitude.

13. Filter holder body (10) according to one of claims 5 to 12, which has a revolution cylinder shape, the chip (115) being curved and positioned at the periphery of the body.

14. Filter holder body (10) according to claim 13, wherein a curved surface of the chip (115) is positioned opposite a curved periphery of the body (105), the curved surface and the curved periphery being curved in a same direction.

15. Method (40) for manufacturing a filter holder (10), **characterised in that** it comprises:
- a step (405) of positioning a chip, carried by a chip support formed of a first material, in a manufacturing mould of a filter holder body,
- a step (410) of injecting a second material, miscible with the first material at an injection temperature of the second material, into the mould to form the filter holder body,
- a step of melting the chip support in contact with the second material injected into the manufacturing mould of the filter holder body to form first and second mixed materials,
- a step (415) of solidifying the first and second mixed materials, the chip being positioned in the filter holder body, and
- a step (420) of recording information representative of a filter holder identifier in a radio-identification chip.
